(19) Europäisches Patentamt

European Patent Office

Office européen des brevets

(11) EP 1 267 307 A1

(12) **EUROPÄISCHE PATENTANMELDUNG**

(43) Veröffentlichungstag:
18.12.2002 Patentblatt 2002/51

(51) Int Cl.$^7$: **G06T 7/40**

(21) Anmeldenummer: 01114471.4

(22) Anmeldetag: **15.06.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ZN Vision Technologies AG**
**44801 Bochum (DE)**

(72) Erfinder:
• **Gehlen, Stefan Dr.**
**44869 Bochum (DE)**
• **Anschütz, Maik**
**44892 Bochum (DE)**

• **Brauckmann, Michael Dr.**
**58456 Witten (DE)**
• **Grünendick, Thorsten**
**44801 Bochum (DE)**
• **Homberg, Dirk**
**45549 Sprockhövel (DE)**
• **Kreutz, Martin**
**45136 Essen (DE)**

(74) Vertreter: **Grünecker, Kinkeldey,**
**Stockmair & Schwanhäusser Anwaltssozietät**
**Maximilianstrasse 58**
**80538 München (DE)**

(54) **Texturanalyse**

(57) Die Erfindung betrifft ein skalierungsinvariantes Verfahren zur Texturanalyse mit den Schritten: Erzeugen eines eine Textur aufweisenden digitalisierten Subjektbildes, Fouriertransformieren des digitalisierten Subjektbildes, Erzeugen einer Fouriermatrix, deren Komponenten die Absolutbeträge der Fourierkoeffizienten des fouriertransformierten Subjektbildes sind, Ausschneiden einer Teilmatrix aus der Fouriermatrix, wobei die Teilmatrix die Fourierkoeffizienten der Fouriermatrix umfasst, deren Ortsfrequenzen in einem vorbestimmten Bereich liegen. Die Texturmerkmale werden schließlich aus dieser Teilmatrix extrahiert.

**Figur 1**

**Beschreibung**

Gebiet der Erfindung

Die Erfindung betrifft ein Verfahren zur Texturanalyse von digitalisierten Subjektbildern, insbesondere zur Analyse von Epilumineszenz (ELM) - Aufnahmen von Hautmalen im Hinblick auf eine mögliche Krebserkrankung.

Stand der Technik

Die Analyse von Textur spielt eine große Rolle in einer Reihe von Bildverarbeitungsanwendungen. Diese Applikationen reichen von der Fernerkundung über Feldfruchtklassifikation und objektorientierte Bildkodierung bis hin zur Gewebeerkennung in medizinischen Bildern.

So werden Texturmerkmale von Dermatologen ausgewertet wenn sie unbekannte Hautmale begutachten, um sie in Hinblick auf eine mögliche Krebserkrankung zu analysieren. Unter den wichtigsten Hautmalen, die dabei erkannt werden sollen, sind die sogenannten malignen Melanome. Diese Läsionen können von der Vielzahl gutartiger Hautmale anhand von verschiedenen Merkmalen unterschieden werden: so verändern sie sich teilweise über die Zeit und sie haben bestimmte Farben oder eine bestimmte Struktur, z.B. eine Textur. Da Veränderungen der Hautmale erst bei wiederholter Analyse erkannt werden können, kommt bei einer ersten Hautuntersuchung vor allem der Texturanalyse eine besondere Bedeutung zu. In vielen Fällen können die Melanome an der Veränderung der normalen Hautstruktur erkannt werden. In Epilumineszenzaufnahmen sind oft netzartige Strukturen in den Hautmalen erkennbar, die in gutartigen (benignen) Hautläsionen regelmäßig in Form, Größe und Verteilung sind, während Unregelmäßigkeiten oft ein Indiz für die Bösartigkeit eines Hautmals sind.

Zur Unterstützung der Texturanalyse existieren in der Technik einige computergestützte Verfahren zur Texturklassifikation. Bei lernenden Verfahren umfassen diese typischerweise zwei Phasen, nämlich Training und Klassifikation. In beiden Phasen werden mit Hilfe von Texturanalysemethoden Merkmale aus den Bildern extrahiert. In der Trainingsphase werden für jedes Bild im Trainingsdatensatz diese Merkmale berechnet. Währen der Klassifikationsphase werden die gleichen Merkmale aus einem unbekannten Bild extrahiert und mit den Merkmalen der Texturen aus dem Trainingsdatensatz verglichen.

Die Methoden, die zur Berechnung dieser Merkmale ausgewählt werden, sind für den Erfolg der Texturklassifikation entscheidend. Gute Erfolge in der Texturklassifikation wurden erzielt mit Verfahren, die stochastische Modelle wie Gaussian Markov Random Fields (GMRF) und Autoregression, statistische Analyse, ortsfrequenzbasierte Techniken wie Gaborfilter und Wavelets umfassen.

Jede dieser bekannten Techniken weist aber spezifische Nachteile auf.

So wird meist eine sehr große Anzahl von Merkmalen verwendet, um jede der Texturen zu beschreiben, was zu einer beträchtlichen und somit schlecht handhabbaren Größe des Merkmalraumes führt. Femer sind diese Merkmalsextraktionstechniken sehr rechenintensiv. Viele dieser Verfahren führen zudem zu fehlerhaften Klassifikationen, wenn die zu klassifizierenden Texturen einer Rotation unterzogen werden.

Angesichts dieser Nachteile ist es eine Aufgabe der vorliegenden Erfindung ein Verfahren bereitzustellen, das die oben genannten Probleme vermeidet.

Insbesondere ist es eine Aufgabe der vorliegenden Erfindung, ein Verfahren bereitzustellen, mit dem sich Texturmerkmale bestimmen lassen, die gegenüber Translationen und Änderungen der Skalierung invariant sind.

Beschreibung der Erfindung

Diese Aufgaben werden das Verfahren mit den Schritten von Anspruch 1 gelöst.

Nach dem erfindungsgemäßen Verfahren wird aus einer Aufnahme mit einem zu untersuchenden texturierten Subjekt ein digitalisiertes Subjektbild erzeugt und fouriertransformiert; aus einer durch die Absolutwerte der Fourierkoeffizienten gebildeten Matrix F eine Teilmatrix F' ausgeschnitten, welche diejenigen Fourierkoeffizienten der Fouriertransformierten F umfasst, deren Ortsfrequenzen in einem vorbestimmten Bereich liegen, und anschließend werden aus der so erhaltenen Teilmatrix F' Texturmerkmale extrahiert.

Während mit herkömmlichen Verfahren die korrekte Texturanalyse von verschiedenen Aufnahmen sehr schwierig ist, wenn diese mit unterschiedlichen Vergrößerungseinstellungen gemacht wurden, werden unterschiedliche Vergrößerungseinstellungen durch das im erfindungsgemäßen Verfahren beschriebene Ausschneiden der Teilmatrix automatisch berücksichtigt, da das Verfahren durch diesen Schritt skalierungsinvariant wird. Dies erlaubt eine wesentlich einfachere und schnellere Texturanalyse.

In einer besonders bevorzugten Weiterbildung des erfindungsgemäßen Verfahrens umfasst das Extrahieren von Texturmerkmalen aus der Teilmatrix F' die folgenden Schritte: Ermitteln von Filtermasken $fm_\nu$ (wobei $\nu=1,..., Z$) für eine vorgegebene Anzahl Z von Texturfiltern, wobei die Filtermasken $fm_\nu$ in Abhängigkeit von der Größe der Teilmatrix F' gebildet werden, und Ermitteln von Merkmalsmatrizen $M^{(\nu)}$ durch Anwenden der Filtermasken $fm_\nu$ auf die Teilmatrix F': $M^{(\nu)} = F'^* fm_\nu$. Dadurch, dass die Filtermasken für jedes zu untersuchende Bild in Abhängigkeit von der Größe der für das Bild erhaltenen Teilmatrix gebildet werden, werden Änderungen der Skalierung bei verschiedenen Bildern automatisch berücksichtigt.

Vorzugsweise werden die Texturmerkmale $m_v$ des Subjekts gemäß

$$m_v = 1/MN \ \Sigma \ \left| M^{(v)}_{ij} \right|$$

ermittelt, wobei über alle Matrixkoeffizienten $M^{(v)}_{ij}$ $i=1, ..., M$; $j=1,...,N$ der Merkmalsmatrix $M^{(v)}$ summiert wird, da festgestellt wurde, dass den so ermittelten Texturmerkmalen eine hohe Aussagekraft zukommt.

Als besonders bevorzugte Texturfilter werden Gaborfilter $GF_v$ oder Mallatfilter $MF_v$ verwendet, deren Stärken bei der Bildanalyse hinreichend bekannt sind.

Eine besonders vorteilhafte Weiterbildung der vorliegenden Erfindung stellt ein Verfahren bereit, bei dem die verwendeten Texturfilter rotationsinvariant sind.

Dadurch lassen sich Texturmerkmale bestimmen, die neben der Invarianz gegenüber Translationen und Änderungen der Skalierung auch gegenüber Rotationen invariant sind. Hierdurch wird bei der Analyse von Bildern nicht nur eine etwaige Änderung der Vergrößerung (d.h. des Abbildungsmaßstabes) berücksichtig, sondern gleichzeitig auch verschiedene Orientierungen der Bilder.

Beispiele für rotationsinvariante Texturfilter sind rotationsinvariante Gaborfilter $GF_v$ und rotationsinvariante Mallatfilter $MF_v$, die in dieser Weiterbildung des erfindungsgemäßen Verfahrens auch besonders bevorzugt eingesetzt werden.

Als besonders günstig hat es sich erwiesen, wenn die Mittenfrequenzen $f_v$ und Bandbreiten der (rotationsinvarianten) Gaborfilter bzw. Mallatfilter so vorgegeben werden, dass die Differenzen $|f_{v+1} - f_v|$ geometrisch anwachsen und dass zwischen benachbarten Filtern eine Überlappung besteht.

Dadurch wird der für das gegebene Problem relevante Frequenzbereich mit einer möglichst geringen Anzahl von Filtern optimal abgedeckt, was den zur Analyse erforderlichen Rechenaufwand auf ein geringst mögliches Ausmaß reduziert.

Das Subjektbild wird bevorzugt durch eine Segmentierung aus dem Originalbild oder dem Grauwertbild erzeugt. Die Segmentierung ergibt ein Subjektbild, das im Idealfall das Subjekt gegenüber dem Hintergrund separiert. Hierdurch wird eine besonders effektive Ausschaltung des für die Analyse der Textur irrelevanten, aber unter Umständen störenden, d.h. die Ergebnisse verfälschenden, Hintergrundes erreicht.

Die Segmentierung weist im allgemeinen die folgenden Schritte auf: Konvertieren des Bildes in ein Grauwertbild (nur erforderlich, fass das Bild nicht schon ein Grauwertbild ist), Erzeugen einer Segmentierungsmaske, und Erzeugen des segmentierten Subjektbildes durch Anwenden der Segmentierungsmaske auf das Grauwertbild oder das Original.

Das so erhaltene Subjektbild zeigt das Subjekt vor einem vollkommen homogenen (i.d.R. schwarzen oder weißen) Hintergrund, der somit keinerlei verfälschenden Einfluss auf die Ergebnisse des am Subjektbild (Subjekt + Hintergrund) durchgeführten Texturanalyseverfahrens hat.

Eine besonders vorteilhafte Segmentierungsmaske ist ein Binärbild, in dem die Bildpunkte des im Original dem Subjekt entsprechende Bildbereichs den Wert "1" aufweisen, während die Bildpunkte des Hintergrundes den Wert "0" aufweisen. Eine diesem Binärbild B entsprechende Pixelmatrix kann als Segmentierungsmaske verwendet werden, da sie bei komponentenweiser Multiplikation mit dem Grauwertbild (oder Original) ein segmentiertes Bild ergibt, in welchem einerseits der Hintergrund wegen der Multiplikation mit "0" als ein keine Information aufweisender Bildbereich erscheint, andererseits aber der Subjektbereich wegen der Multiplikation mit "1" keinen Informationsverlust erleidet.

Es ist zu beachten, dass das Erzeugen einer Segmentierungsmaske unter Umständen ein Binärbild ergibt, das dem Subjekt den "0" und dem Hintergrund den "1" zuweist. In diesem Fall ist es zuerst notwendig, dieses Binärbild zu "invertieren", d.h. "0" in "1" und "1" in "0" umzuwandeln.

In einer besonders bevorzugten Weiterbildung wird zum Erzeugen der Segmentierungsmaske noch ein Tiefpassfilter auf das Binärbild (oder falls wie oben beschrieben notwendig: das invertierte Binärbild) angewandt. Hierdurch wird die im Binärbild vorhandene scharfe Kante zwischen Subjekt und Hintergrund "aufgeweicht", wodurch hohe Ortsfrequenzanteile abgeschnitten werden, die ansonsten als Artefakt in der Texturanalyse auftreten würden.

Das erfindungsgemäße Verfahren und insbesondere seine Weiterbildungen lassen sich hervorragend zur Untersuchung von Hautmalen einsetzen.

Bei der Untersuchung von Hautmalen wird der vorbestimmte Bereich der Ortsfrequenzen, deren zugehörige Fourierkoeffizienten die Teilmatrix F' bilden entsprechend der charakteristischen Eigenschaften von Hautmalen gewählt. Somit können andere, dem Hautmal überlagerte weitere Hauteigenschaften, bei der Texturanalyse soweit wie möglich ausgeschaltet werden.

In allen oben beschriebenen Verfahren wird die Fouriertransformation bevorzugt durch ein FFT (Fast Fourier Transformation) Verfahren durchgeführt.

Im Folgenden wird eine bevorzugte Ausführungsform der Erfindung unter Bezugnahme auf die beigefügten Figuren erläutert:

Figur 1        zeigt die zu analysierende ELM-Aufnahme.

Figur 2        zeigt das Grauwertbild der zu analysierende ELM-Aufnahme.

Figur 3        zeigt das Binärbild der ELM-Aufnahme nach der Segmentierung in die Bereiche Läsion und umgebende Haut.

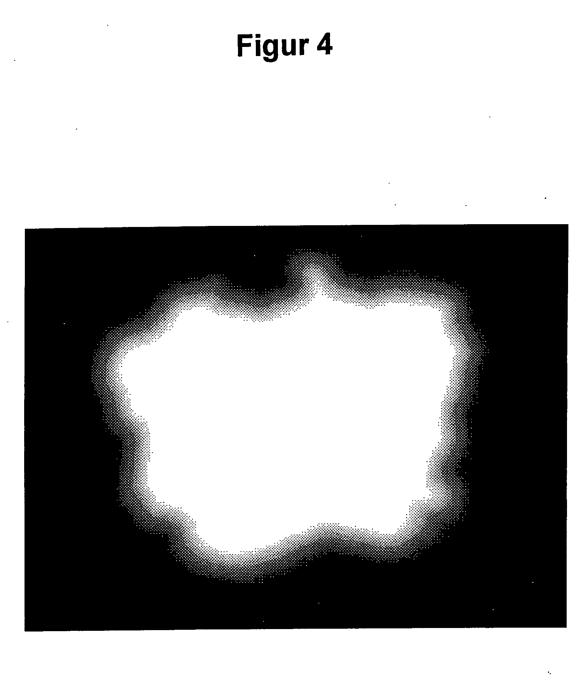

Figur 4    zeigt das invertierte und tiefpassgefilterte Binärbild.

Figur 5    zeigt die durch Anwendung der tiefpassgefilterten Segmentationsmaske auf das Grauwertbild ausgeschnittene Läsion.

Figur 6    zeigt die Darstellung der Fouriertransformierten des Läsionsbildes.

Figur 7    zeigt den Auschnitt der Fouriertransformierten des Läsionsbildes, der relevante Information enthält.

Figur 8a-d:    zeigt vier Filtermasken: (8a) $fm_1$, (8b) $fm_2$, (8c) $fm_3$, (8d) $fm_4$ .

Figur 9a-d    zeigt die vier Merkmalsmatrizen: (9a) $M^{(1)}$, (9b) $M^{(2)}$, (9c) $M^{(3)}$, (9d) $M^{(4)}$, die aus der Anwendung der in Figur 8 gezeigten Filtermasken auf das in Figur 7 gezeigte Bild resultieren.

Die Erfindung wird nachfolgend anhand eines vereinfachten Beispiels erläutert, in dem nur vier translations-, rotations- und skalierungsinvariante Texturmerkmale aus einem gewöhnlichen Bild, in diesem Fall einer zu analysierenden ELM-Aufnahme, extrahiert werden.

In ihrer allgemeinen Form sind Gaborfilter zwar sehr gut geeignet, um orientierungsabhängige Texturanalysen durchzuführen, aber ungeeignet für rotationsinvariante Texturklassifikation. Für rotationsinvariante Texturklassifikation werden stattdessen spezielle rotationssymmetrische Gaborfilter verwendet, bei denen alle Orientierungen gleich stark präsent sind.

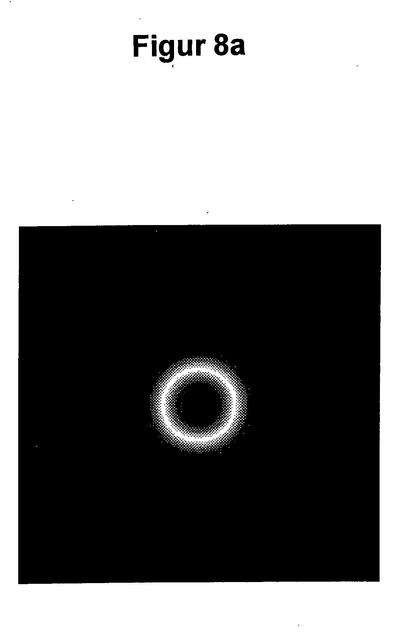

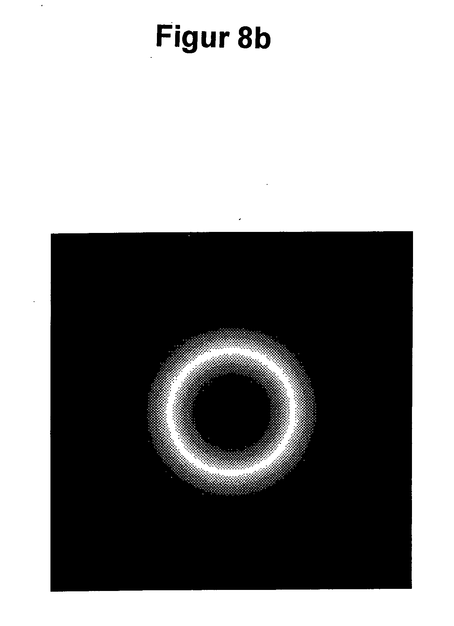

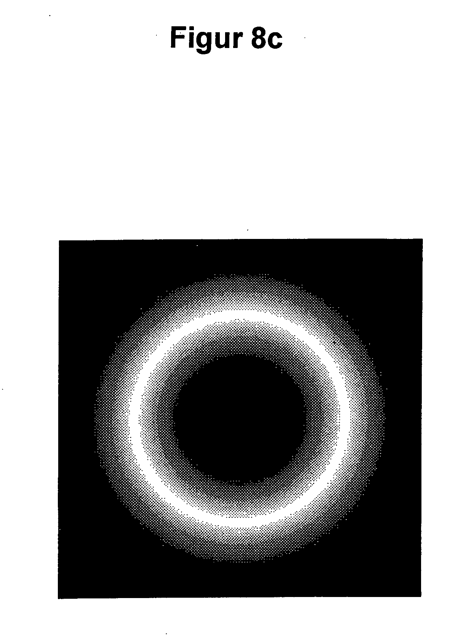

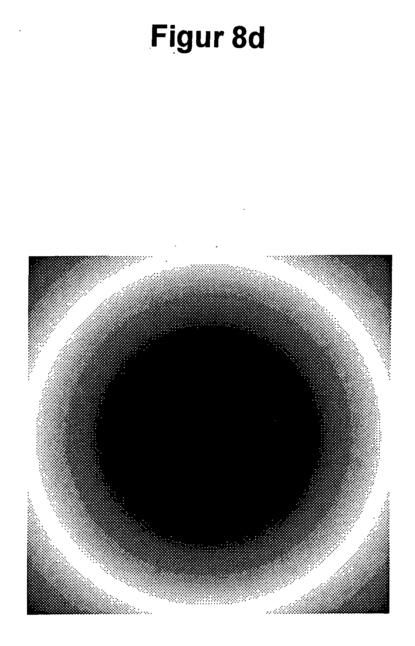

Figur 8a - 8d zeigt die Frequenzbereichsdarstellung vier solcher rotationssymmetrischer Gaborfilter mit 1,6 bis 8 Zyklen pro Bild.

Ein jeder dieser rotationssymmetrischer Gaborfilter wird beschrieben durch:

$$h\,(x,y) = g(x,y)\,exp\{-2\pi iF(x^2+y^2)^{1/2}\} \qquad (1)$$

wobei $F$ eine Mittenfrequenz angibt.

Die zugehörige Gaußfunktion $g\,(x,y)$ ist rotationssymmetrisch:

$$g(x,y)= (1/2\pi\sigma^2)\,exp\{-(x^2+y^2)/(2\sigma^2)\} \qquad (2)$$

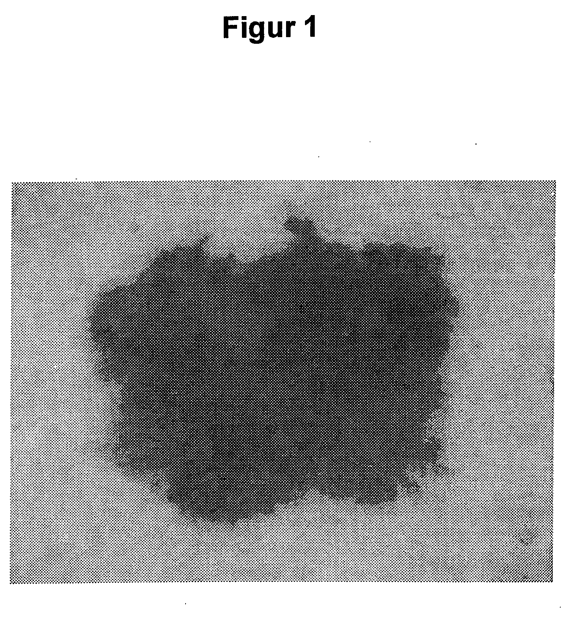

Um aus einem wie in Figur 1 gezeigten Bild vier Texturmerkmale zu extrahieren, werden vier derartige Filterfunktionen bereitgestellt, und zwar so, dass sie den Frequenzbereich so gut wie möglich abdecken. Dabei können sehr tiefe Frequenzen ausgelassen werden, da diese nur unwesentliche Texturinformation beinhalten. Die Mittenfrequenzen der gezeigten vier Gaborfilter wurden so gewählt, dass ihre Abstände zueinander geometrisch wachsen. Gleichzeitig wächst mit steigender Frequenz auch die Bandbreite der Filter, so dass sich benachbarte Filter gegenseitig etwas überlappen, um den Frequenzbereich so gut wie möglich abzudekken. Bei der Merkmalsextraktion wird die Filterantwort jedes der vier Filter aus dem Bild berechnet und über die Anzahl *(MN)* der Pixel *(i,j)* gemittelt.

$$f= 1/(MN)\; \Sigma\; \Sigma\; |\; x(i,j)\; | \qquad (3)$$

wobei $x(i,j)$ die Filterantworten bei Pixel *(i,j)* des gefilterten Bildes sind.

f wird für jedes Bild mit jedem der vier rotationssymmetrischen Gaborfilter berechnet, um die vier rotationsinvarianten Texturmerkmale zu erhalten.

Es muss nun berücksichtigt werden, dass in der Regel jede Aufnahme mit einer unterschiedlichen Vergrößerungseinstellung und/oder einem unterschiedlichen Objektabstand aufgenommen wird. Damit aus diesen unterschiedlichen Bildern vergleichbare Texturmerkmale verglichen werden können, müssen folgende Maßnahmen bei der Merkmalsextraktion getroffen werden, wobei der Einfachheit halber angenommen wird, das jedes dieser Bilder die gleiche Pixelanzahl aufweist.

Der erste Schritt der Merkmalsberechnung ist die Fouriertransformation (diskrete FFT des Ausgangsbildes). Dieses wird dabei in die darin vorhandenen Ortsfrequenzen zerlegt. Als Ergebnis erhält man eine Matrix von komplexen, Fourierkoeffizienten mit dergleichen Dimension wie das Ausgangsbild. Dabei liegen die Koeffizienten für die höchsten im Bild vorhandenen Frequenzen an den Rändern der Matrix, während der Niederfrequenzanzeil in der Nähe des Zentrums zu finden ist. So liegen z. B. bei einem Bild mit 256 mal 256 Pixeln die entsprechenden Fourierkoeffizient der Frequenzen "128 Schwingungen pro Bilddimension" an den Rändern der Matrix der komplexen Fourierkoeffizienten.

Unter Verwendung der tatsächlichen Bildhöhe und -breite könne die Frequenzen in Schwingungen pro Längeneinheit umgerechnet werden. Z.B. liegen bei einem Bild mit 256 x 256 Pixel, das auf dem Objekt einer Fläche von 10 mm x 10 mm entspricht, die Koeffizienten der Frequenzen "12,8 Schwingungen pro mm" an den Rändern der Matrix der Fourierkoeffizienten.

Um aus den oben beschriebenen Matrizen vergleichbare Texturmerkmale extrahieren zu können, müssen die rotationssymmetrischen Gaborfilter in Abhängigkeit von der Vergrößerung, mit der die Aufnahme erzeugt wurde so angepasst werden, dass sie den gleichen Frequenzbereich (in Einheiten von Schwingungen pro Längeneinheit) in jedem zu untersuchenden Bild abdecken. Hierzu muss man zunächst die höchste noch berücksichtigte Ortsfrequenz berücksichtigen, deren Koeffizienten nach der Fouriertransformation an den Rändern der komplexen Matrix der Fourierkoeffizienten liegen. Um nun die Koeffizienten der Frequenzanteile von 0 bis zu einer höchsten zu berücksichtigenden Ortsfrequenz zu erhalten, darf nur eine Teilmatrix des FFT-Ergebnisses verwendet werden. Um das zu erreichen müssen die Filtermasken der rotationssymmetrischen Gaborfilter in ihrer Größe entsprechend der Größe der relevanten Teilmatrix angepasst werden. Zur Errechnung der Filterantworten der angepassten Filtermasken werden die einzelnen Masken mit der relevanten Teilmatrix der Fouriertransformierten komponentenweise multipliziert und die Summe der Ergebnismatrix bestimmt.

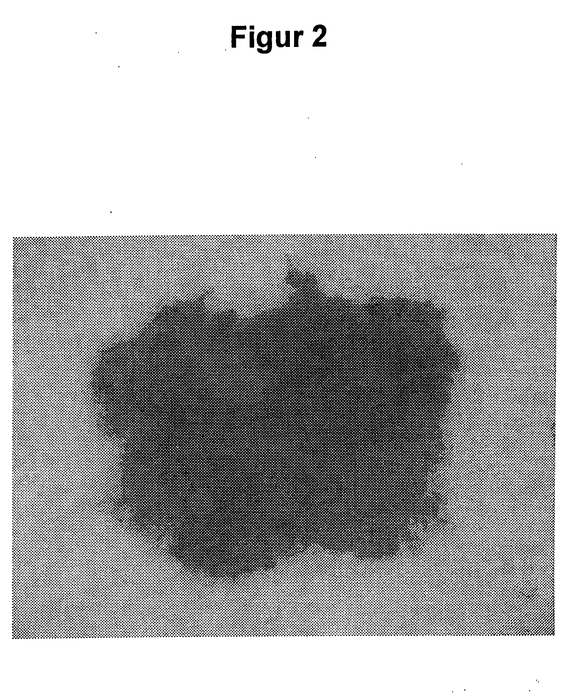

Figur 2 zeigt das aus der ELM-Aufnahme (Img) erzeugte Grauwertbild G.

Allgemein wird zur Umwandlung eines farbigen Bildes in ein für die Texturanalyse bevorzugtes Grauwertbild G die folgende Formel verwendet:

$$G = r * Img_R + g * Img_G + b * Img_B \ ,$$

wobei $Img_R$, $Img_G$, $Img_B$ in die Farben Rot R, Grün G und Blau B separierte Teilbilder des Bildes Img sind. Bevorzugte Parameter sind r=0.299, g=0.587, b=0.144.

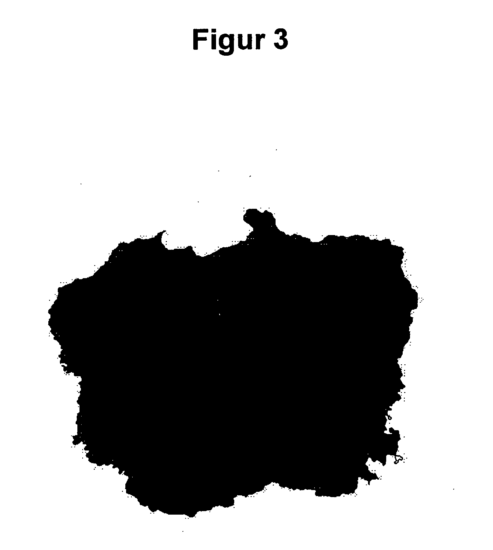

Figur 3 zeigt ein Binärbild der ELM-Aufnahme nach der Segmentierung in die Bereiche Läsion und umgebende Haut. Im vorliegenden Beispiel wurde das segmentierte Binärbild durch Segmentierung des zu analysierenden ELM-Ausgangsbildes erzeugt. Alternativ ist es auch möglich, dieses Bild aus dem in Figur 2 gezeigten Grauwertbild zu extrahieren.

Das Ziel jeder Segmentierung ist die Aufteilung des Bildes in einen interessierenden Objektbereich (in Figur 3 schwarz) und einen nicht weiter interessierenden Hintergrund (in Figur 3 weiß). Im vorliegenden Beispiel entspricht jedoch der in Figur 3 gezeigte schwarze Bereich dem Bitwert 0 entspricht und der umgebende weiße Bereich dem Bitwert 1.

Da für eine Segmentierungsmaske für den Objektbereich der Bitwert 1 und für den Hintergrund der Bitwert 0 erforderlich sind, wird das so erhaltenen Bild "invertiert", um die Bitwerte zu vertauschen.

Ferner ist es sinnvoll, eine Tiefpassfilterung des segmentierten Bildes durchzuführen, um abrupte Änderungen im Übergangsbereichobjekthintergrund zu vermeiden, die sonst verfälschende hohe Frequenzabteile in das Analyseverfahren einbringen würden.

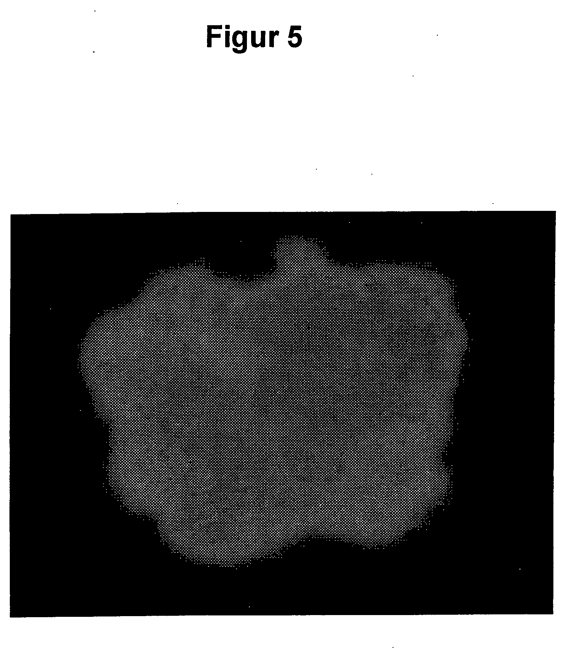

Figur 5 schließlich zeigt die durch Anwenden der tiefpassgefilterten Segmentationsmaske auf das Grauwertbild ausgeschnittene Läsion. Durch das Entfernen der umgebenden Hautbereiche wird nur die Textur der Läsion ausgewertet. Unphysikalische Frequenzanteile, die ohne Tiefpassfilterung ins Bild gekommen wären, wurden abgeschnitten.

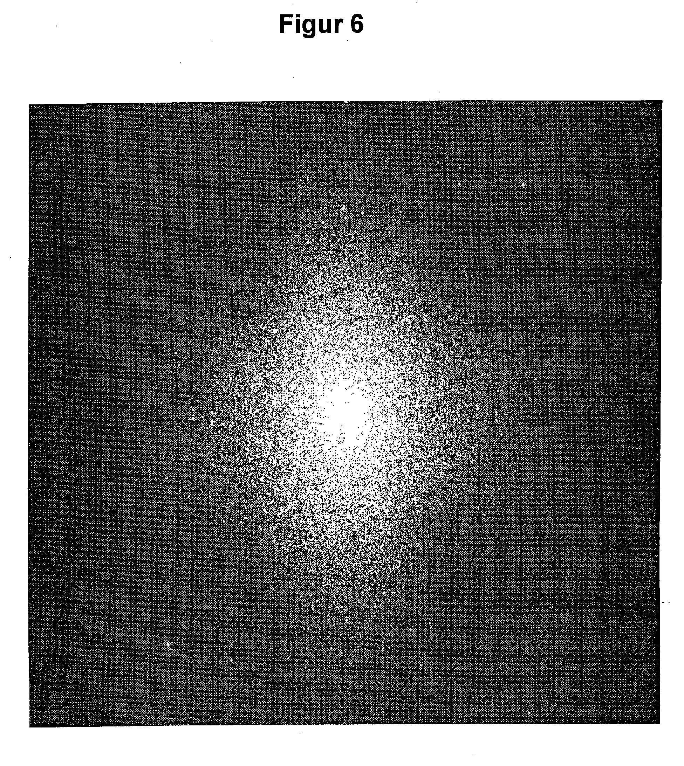

Figur 6 zeigt die auf dem so erhaltenen Läsionsbild L durchgeführte Fouriertransformation. Diese kann durch die üblichen in der Literatur bekannten Algorithmen für zweidimensionale Fouriertransformation bzw. FFT durchgeführt werden. Hierbei ist zu beachten, dass die Komponenten der Matrizen immer durch den Betrag der im Allgemeinen komplexwertigen Fourierkoeffizienten gebildet werden.

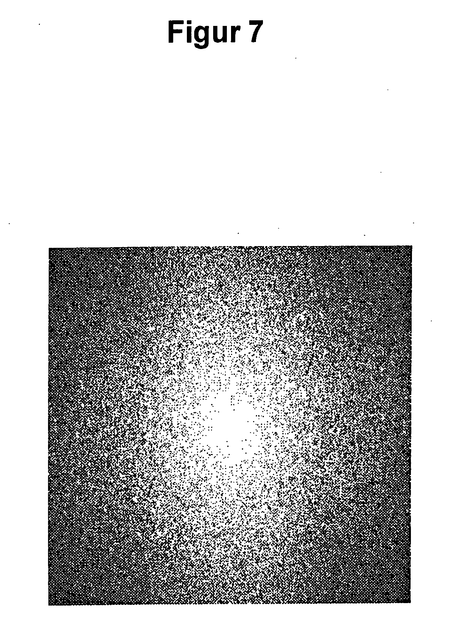

Um nun die oben beschriebene Skalierungsinvarianz zu erhalten, wird in Abhängigkeit von der Vergrößerung mit der die ursprüngliche Aufnahme gemacht wurde, die Teilmatrix aus der Fouriertransformierten ausgeschnitten, die die Koeffizienten der relevanten Ortsfrequenzen enthält. Das Ergebnis ist in Figur 7 gezeigt.

Es werden nun in Abhängigkeit von der Größe dieser Teilmatrix die Filtermasken $fm_\nu$ der rotationsinvarianten Gaborfilter berechnet. Im vorliegenden Beispiel mit vier Gaborfiltern und den Mittenfrequenzen 1,6; 2,74; 4,68; und 8,0 Schwingungen pro Bild ergeben sich die vier in Figur 8a-d gezeigten Filtermasken $fm_\nu$.

Die entsprechenden Merkmalmatrizen ergeben sich nun durch komponentenweise Multiplikation der in Figur 8a-d gezeigten Filtermasken mit dem in Figur 7 fouriertransformierten Läsionsbild.

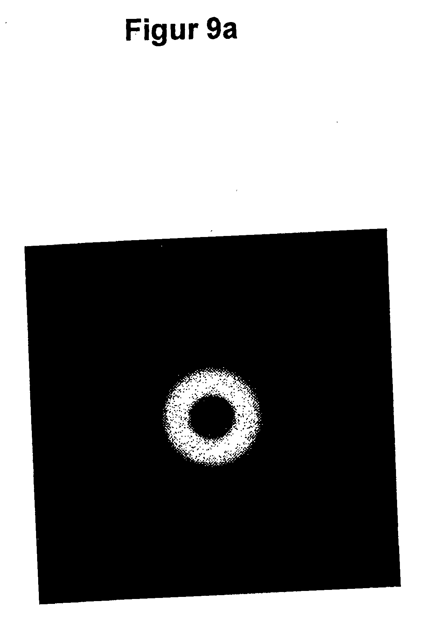

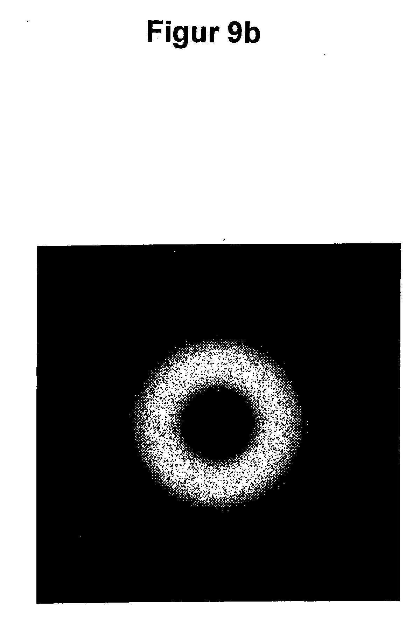

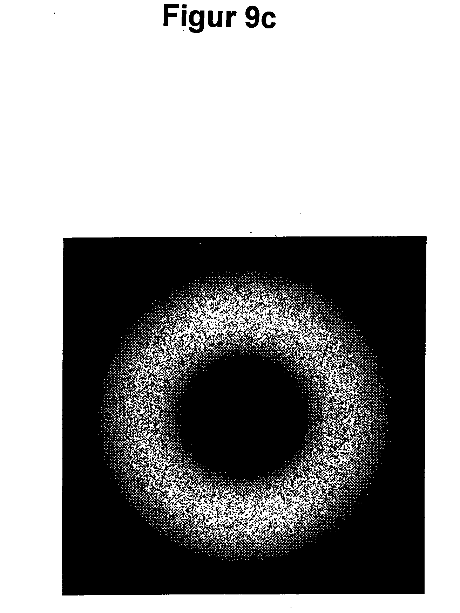

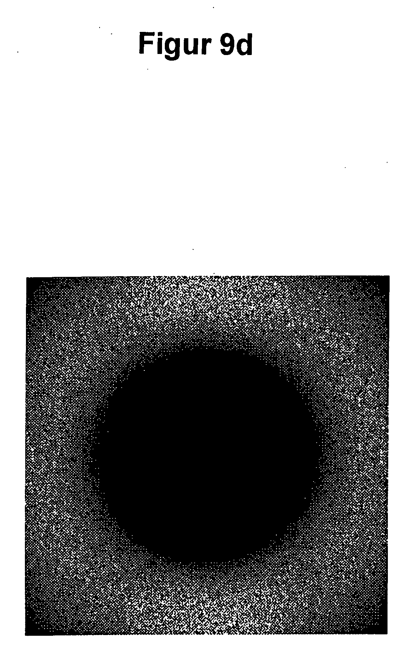

Diese vier Merkmalsmatrizen sind in der Figur 9a-d veranschaulicht: Dabei zeigt Fig. 9a die Merkmalsmatrix $M^{(1)}$, und entsprechend Fig. 9b: $M^{(2)}$, Fig. 9c: $M^{(3)}$, Fig. 9d: $M^{(4)}$.

Schließlich erhält man die erwünschten Texturmerkmale $m_1$ bis $m_4$ durch Aufsummierung aller Elemente $M^{(\nu)}_{ij}$ der entsprechenden Merkmalsmatrizen $M^{(1)}$ bis $M^{(4)}$ und Normierung:

$$m_\nu = 1/MN \ \Sigma \ \left| M^{(\nu)}_{ij} \right|.$$

Aus diesen Texturmerkmalen können nun aussagekräftige, skalierungsinvariante Schlüsse auf den Charakter des untersuchten Hautmals getroffen werden.

Es versteht sich von selbst, dass das im Hinblick auf dermatologische Untersuchungen beschriebene Verfahren auch für andere Einsatzgebiete der Texturanalyse verwendet werden kann, von denen einige in der Einleitung erwähnt wurden.

**Patentansprüche**

1. Skalierungsinvariantes Verfahren zur Texturanalyse mit den Schritten:

   Erzeugen eines eine Textur aufweisenden digitalisierten Subjektbildes,

   Fouriertransformieren des digitalisierten Subjektbildes,

Erzeugen einer Fouriermatrix F, deren Komponenten die Absolutbeträge der Fourierkoeffizienten des fouriertransformierten Subjektbildes sind,

Ausschneiden einer Teilmatrix F' aus der Fouriermatrix F, wobei die Teilmatrix F' die Fourierkoeffizienten der Fouriermatrix F umfasst, deren Ortsfrequenzen in einem vorbestimmten Bereich liegen,

Extrahieren von Texturmerkmalen aus der Teilmatrix F'.

2. Verfahren nach Anspruch 1, in welchem das Extrahieren von Texturmerkmalen ($m_\nu$) die folgenden Schritte umfasst:

Ermitteln von Filtermasken $fm_\nu$ ; $\nu=1,..., Z$; für eine vorgegebene Anzahl Z von Texturfiltern, wobei die Filtermasken $fm_\nu$ in Abhängigkeit von der Größe der Teilmatrix F' gebildet werden,

Ermitteln von Merkmalsmatrizen $M^{(\nu)}$ durch Anwenden der Filtermasken $fm_\nu$ auf die Teilmatrix F': $M^{(\nu)} = F'^* fm_\nu$.

3. Verfahren nach Anspruch 2, in welchem das Extrahieren von Texturmerkmalen ($m_\nu$) aus den Merkmalsmatrizen $M^{(\nu)}$ gemäß

$$m_\nu = 1/MN \sum_{i,j} |\, M^{(\nu)}_{ij}\,|,$$

erfolgt, wobei $M^{(\nu)}_{ij}$ i=1, ..., M; j=1,...,N die Koeffizienten der Merkmalsmatrix $M^{(\nu)}$ sind.

4. Verfahren nach einem der Ansprüche 2 und 3, in welchem die Texturfilter Gaborfilter und Mallatfilter umfassen.

5. Verfahren nach einem der Ansprüche 2 bis 4, in welchem die Texturfilter rotationsinvariante Filter umfassen.

6. Verfahren nach Anspruch einem der Ansprüche 4 und 5, in welchem die Gaborfilter und Mallatfilter Mittenfrequenzen $f_\nu$ und Bandbreiten aufweisen, die so vorgegeben sind, dass die Differenzen $|f_{\nu+1} - f_\nu|$ geometrisch anwachsen und dass zwischen benachbarten Filtern eine Überlappung besteht.

7. Verfahren nach einem der vorangegangenen Ansprüche, in welchem das Subjektbild durch Segmentierung aus einem das Subjekt enthaltenden Bild erzeugt wird, mit den Schritten:

Konvertieren des Bildes in ein Grauwertbild,

Erzeugen einer Segmentierungsmaske,

Erzeugen des Subjektbildes durch Anwenden der Segmentierungsmaske auf das Bild oder das Grauwertbild.

8. Verfahren nach Anspruch 7, in welchem zum Erzeugen der Segmentierungsmaske das Grauwertbild in ein das Subjekt von einem Hintergrund separierendes Binärbild segmentiert wird.

9. Verfahren nach Anspruch 8, in welchem zum Erzeugen der Segmentierungsmaske ein Tiefpassfilter auf das Binärbild angewandt wird.

10. Verfahren nach einem der vorangegangenen Ansprüche, in welchem das Subjekt ein Hautmal in einem Hautgewebe ist.

11. Verfahren nach einem der vorangegangenen Ansprüche, in welchem der vorbestimmte Bereich der Ortsfrequenzen gemäß der charakteristischen Eigenschaften von Hautmalen ermittelt wird.

12. Verfahren nach einem der vorangegangenen Ansprüche, in welchem zur Fouriertransformation ein FFT Verfahren verwendet wird.

# Figur 1

# Figur 2

# Figur 3

# Figur 4

# Figur 5

# Figur 6

# Figur 7

# Figur 8a

# Figur 8b

# Figur 8c

# Figur 8d

# Figur 9a

# Figur 9b

# Figur 9c

# Figur 9d

## EUROPÄISCHER RECHERCHENBERICHT

**Europäisches Patentamt**

Nummer der Anmeldung

EP 01 11 4471

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 98 52011 A (UNIV EMORY ;BROOKS KENNETH W (US)) 19. November 1998 (1998-11-19) * Seite 17, Zeile 1 - Zeile 15; Abbildung 7 * | 1-12 | G06T7/40 |
| A | US 6 137 898 A (RANDY P. BROUSSARD) 24. Oktober 2000 (2000-10-24) * Zusammenfassung * | 1-12 | |

**RECHERCHIERTE SACHGEBIETE (Int.Cl.7)**

G06T
G06F

Der vorliegende Recherchenbericht wurde für alle Patentansprüche erstellt

| Recherchenort | Abschlußdatum der Recherche | Prüfer |
|---|---|---|
| DEN HAAG | 19. Dezember 2001 | Chateau, J-P |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**
EP 01 11 4471

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-12-2001

| Im Recherchenbericht angeführtes Patentdokument | Datum der Veröffentlichung | Mitglied(er) der Patentfamilie | Datum der Veröffentlichung |
|---|---|---|---|
| WO 9852011 A | 19-11-1998 | AU 7571298 A<br>WO 9852011 A2 | 08-12-1998<br>19-11-1998 |
| US 6137898 A | 24-10-2000 | US 5999639 A<br>AU 1466899 A<br>EP 1032914 A1<br>WO 9928853 A1<br>US 6205236 B1<br>US 6115488 A<br>US 6091841 A<br>US 6167146 A<br>AU 9295598 A<br>BR 9812021 A<br>CN 1273516 T<br>EP 1009283 A1<br>NO 20000914 A<br>WO 9909887 A1<br>US 2001008562 A1<br>US 5996639 A | 07-12-1999<br>16-06-1999<br>06-09-2000<br>10-06-1999<br>20-03-2001<br>05-09-2000<br>18-07-2000<br>26-12-2000<br>16-03-1999<br>26-09-2000<br>15-11-2000<br>21-06-2000<br>24-02-2000<br>04-03-1999<br>19-07-2001<br>07-12-1999 |

EPO FORM P0461

Für nähere Einzelheiten zu diesem Anhang : siehe Amtsblatt des Europäischen Patentamts, Nr.12/82